# EUROPÄISCHE PATENTSCHRIFT

(11) **EP 1 247 859 B1**
(45) Veröffentlichungstag und Bekanntmachung des Hinweises auf die Patenterteilung: **14.07.2004**
(21) Anmeldenummer: 02006988.6
(22) Anmeldetag: 27.03.2002
(51) Int. Cl.: C11D 3/39, D06L 3/02, G01N 1/40, G01N 31/22, D06B 23/20

(54) **Verfahren zum Prüfen von Textil-Behandlungsflotten und zum Durchführen des Verfahrens geeignetes Gerät**
Method and apparatus for testing baths for the treatment of textiles
Procédé et dispositif pour tester des bains de traitement de textiles

(30) Priorität: 04.04.2001 DE 10116752
(43) Veröffentlichungstag der Anmeldung: 09.10.2002
(73) Patentinhaber: Cognis Deutschland GmbH & Co. KG, 40589 Düsseldorf (DE)
(72) Erfinder: Janssen, Leonardus, 40885 Ratingen (DE)

(56) Entgegenhaltungen:
- EP-A- 0 114 788
- DE-B- 1 258 356
- DE-C- 617 262
- GB-A- 1 189 653
- ANGSTMANN D ET AL: "VORBEHANDLUNG VON CELLULOSEFASERN, KATALYTSCHAEDEN - URSACHEN UND MOEGLICHKEITEN, SIE ZU VERHINDERN" TEXTIL PRAXIS INTERNATIONAL, KONRADIN VERLAG R.KOHLHAMMER GMBH. LEINFELDEN, DE, Bd. 5, 1. Mai 1993 (1993-05-01), Seiten 412-416, XP000611755 ISSN: 0340-5028

## Beschreibung

Die Erfindung betrifft ein Verfahren zum Prüfen der Behandlungsflotten und deren Vorstufen, die zum, insbesondere kontinuierlichen, Bleichen von Textil mit einem oxidativen Bleichmittel, insbesondere Wasserstoffperoxid, eingesetzt werden, auf die Anwesenheit mindestens eines zu Katalytschäden auf und/oder im Textil führenden Katalysators in den einzelnen Behandlungsflotten bzw. deren Vorstufen.

Beim Bleichen von Textil mit einem oxidativen Bleichmittel wird Wasserstoffperoxid am häufigsten verwendet, wobei die alkalische, wässrige Bleiche für natürliche und regenerierte Cellulose-Textilien, z. B. Baumwolle, die größte Bedeutung hat. Bei der Textilbehandlung, welche bei größeren Anlagen in der Regel kontinuierlich durchgeführt wird, durchlaufen die Endlosbahnen des Textils die folgenden Stufen, wobei einige dieser Stufen nicht zwingend, sondern optional sind:

Bei der Entschlichtung wird das Schlichtemittel, das hauptsächlich aus Stärke besteht, entfernt. Nach dem Waschen mit Wasser kann sich eine Peroxid-Kaltbleich-Imprägnierung anschließen, nach der ebenfalls gewaschen wird. Danach können die Abkochung und das Mercerisieren folgen, wobei auch hier nach jeder Stufe mit klarem Wasser gewaschen wird. Dann wird das Textil mit Wasserstoffperoxid und Natronlauge imprägniert, wobei die Imprägnierung in einem vom Textil durchlaufenen Bad oder durch Aufsprühen erfolgen kann. In der darauf folgenden Dämpfestufe wird das Textil mit heißem Sattdampf behandelt. Hier findet die eigentliche Bleichreaktion statt. Danach schließt sich wiederum ein Waschvorgang an.

Das mehrstufige Verfahren kann kontinuierlich oder diskontinuierlich durchgeführt werden, wobei die kontinuierliche Verfahrensführung das Haupteinsatzgebiet für die Erfindung darstellt.

Bei dieser Peroxidbleiche kann es zu zwei unterschiedlichen Reaktionen des Peroxides kommen. Bei der heterolytischen Reaktion findet die gewünschte Bleichreaktion statt. Die heterolytische Zersetzung wird durch Parameter wie pH-Wert, Temperatur und Zeitdauer beeinflußt und gesteuert. Der freiwerdende native Sauerstoff reagiert sofort mit den zu oxidierenden Farbträgern.

In Konkurrenz zur erwünschten heterolytischen Zersetzung kann das Peroxid aber auch homolytisch zersetzt werden, wobei diese Zersetzung mit vergleichbarer Geschwindigkeit erfolgt und vor allem durch Katalysatoren, wie Metalle, Schmutz und Mikroorganismen ausgelöst wird. Wirksame Katalysatoren sind die Metalle Mangan, Kupfer und vor allem Eisen. Bei dieser homolytischen Zersetzung wird nativer Sauerstoff freigesetzt und zerstört oxidativ die Cellulose. Sichtbare Textilschäden, die auch Katalytlöcher oder Katalytschäden genannt werden, sind die Folge dieser lokalen Oxidation der Cellulose. Vor allem sind feine, ungelöste Eisenpartikel schädlich.

Da bei der Verarbeitung der Baumwolle und anderer Cellulose eine Vielzahl von Geräten und Apparaten aus Eisen verwendet wird, wobei dies auch für die Bleichbehandlung gilt, bei der beispielsweise Rohre und Tanks aus Eisen verwendet werden, tritt als häufigster Katalysator Eisen auf. Das Eisen kann bereits in der Rohware, also beim Ernten der Baumwolle, beim Kardieren, Spinnen, Weben, Wirken, usw. aufgebracht werden. Feine Eisenteilchen können jedoch auch in späteren Behandlungsstufen wie Entschlichten, Abkochen oder Bleichen eingeschleppt werden.

Ein eventueller Katalytschaden zeigt sich in der betrieblichen Praxis, insbesondere bei der kontinuierlichen Bleiche des Textils, erst am Ende der mehrstufigen Behandlung. In diesem Fall ist es äußerst wichtig, zu wissen, ob der Katalytschaden von Eisen hervorgerufen wurde und ob die Katalysatoren bereits in der Rohware vorhanden waren oder erst später in den nachfolgenden Behandlungsstufen aufgebracht wurden. Diese Fragen lassen sich bisher relativ problemlos durch entsprechende Laboruntersuchungen beantworten. Durch die Untersuchung der Rohware auf Eisen bzw. andere Katalysatoren erhält man die Information, ob es sich um Eisen handelt und ob dieser Katalysator durch die mehrstufige Behandlung auf das Textil aufgebracht worden ist oder schon auf der Rohware vorhanden war. Ist letzteres nicht der Fall, müssen sämtliche Behandlungsflotten geprüft werden, ob sie katalytisch wirksame Metallpartikel enthalten.

Inwieweit diese Partikel tatsächlich auf dem Textil abgelagert werden und zu Katalytschäden führen, kann mit herkömmlichen Untersuchungsverfahren jedoch nicht geklärt werden. Es ist nämlich durchaus denkbar, dass die Behandlungsflotte katalytisch wirksame Partikel enthält, welche sich aus dem einen oder anderen unbekannten Grund aber nicht auf dem Textil ablagern, so dass die Ursache für Katalytschäden trotz vorhandener katalytisch wirksamer Partikel nicht in dieser Behandlungsstufe zu suchen ist. In der Praxis hat es sich daher gezeigt, dass beim Auftreten von Katalytschäden die herkömmlichen Untersuchungsmethoden sehr zeitaufwändig sind und sich oft über mehrere Tage erstrecken, wobei die in diesen Tagen verarbeitete Textilmenge infolge der Katalytschäden unbrauchbar geworden ist und ausgesondert werden muss. Der dadurch verursachte Schaden ist oft sehr beträchtlich.

Der Erfindung liegt daher die Aufgabe zugrunde, im Verfahren der eingangs genannten Art schnell, sicher und ohne großen Zeit- und Kostenaufwand zu prüfen, an welcher Stelle im Behandlungsverfahren der schädliche Katalysator auf das Textil aufgebracht wird.

Diese Aufgabe wird im eingangs genannten Verfahren erfindungsgemäß dadurch gelöst, dass ein vorgegebenes Volumen der zu prüfenden Behandlungsflotte bzw. der Vorstufe durch ein Prüf-Textil gefiltert und das Prüf-Textil danach auf die Anwesenheit des Katalysators untersucht wird.

Mit dem erfindungsgemäßen Verfahren lassen sich nicht nur die Behandlungsflotten, sondern auch deren Vorstufen prüfen, die z. B. aus dem Wasserzulauf oder aus Chemikalienbädern bestehen, welche durch verschmutzte Chemikalien Katalysatoren eintragen können. Die zu untersuchenden Behandlungsflotten sind beispielhaft weiter oben bei der Erläuterung der einzelnen Stufen der Textilbehandlung genannt. Das erfindungsgemäße Verfahren ist besonders vorteilhaft für kontinuierliche Textilbehandlungen, da in diesem Fall das zu behandelnde Textil erst nach dem Abschluss der gesamten Behandlung, nicht aber in den einzelnen Stufen, auf die Anwesenheit eines Katalysators untersucht werden kann.

Erfindungsgemäß wird die Textilbehandlung an einem Prüf-Textil simuliert. Damit wird nicht wie bei herkömmlichen Untersuchungsmethoden die Behandlungsflotte isoliert untersucht. Vielmehr wird die Wirkung der Flotte auf das Textil geprüft, so dass die Frage beantwortet wird, welche Partikel auf dem Textil verbleiben. Z. B. interessiert ein in der Behandlungsflotte gelöster Katalysator, z. B. Eisen-lonen, nicht, da dieser nicht zu Katalytschäden führt. Wichtig sind vielmehr feste Partikel oder auch Agglomerate, z. B. von Eisen-Hydroxiden, die außerdem am Textil haften bleiben. Diese wesentliche Frage wird erstmals durch das erfindungsgemäße Untersuchungsverfahren beantwortet.

Eine besonders zuverlässige Aussage wird erreicht, wenn man das vorgegebene Volumen der zu prüfenden Behandlungsflotte bzw. der Vorstufe unmittelbar aus dem Behältnis der Textilbehandlungsanlage, insbesondere bei arbeitender Anlage, entnimmt. Die Flotte wird also an Ort und Stelle untersucht, wo sie in der Praxis unter exakt den gleichen Bedingungen auch auf das zu behandelnde Textil einwirkt. Ein Verlust an Flotte wird vermieden, wenn man das genannte Volumen der Flotte bzw. der Vorstufe nach der Filtration wieder in das Behältnis zurückführt. Von Vorteil ist außerdem, dass in diesem Fall kein Abwasserproblem entsteht.

Bei der praktischen Erprobung des erfindungsgemäßen Verfahrens hat es sich als vorteilhaft herausgestellt, wenn das vorgegebene Volumen der zu prüfenden Flotte bei 20 bis 100 Litern liegt.

Vorgeschlagen wird außerdem, dass der nachzuweisende Katalysator Eisen oder eine Eisenverbindung ist, da dieser am häufigsten zu Katalytschäden führt.

Auch die Dämpfestufe läßt sich mit dem erfindungsgemäßen Verfahren prüfen, wenn man den beim Dämpfen eingesetzten Dampf kondensiert und das Kondensat in gleicher Weise wie eine Behandlungsflotte prüft.

Für die Untersuchung hat es sich als am effektivsten herausgestellt, wenn man beim Prüfen mehrerer hintereinander angeordneter Textilbehandlungsstufen mit der letzten Stufe beginnt und dann mit der jeweils früheren Stufe fortfährt, bis die Anwesenheit des gesuchten Katalysators in der Behandlungsflotte festgestellt wird, und dass man dann gegebenenfalls die Vorstufen dieser Behandlungsflotte prüft.

Besonders zuverlässige und besonders gut übertragbare Resultate der erfindungsgemäßen Untersuchung auf die Vorgänge innerhalb der Textilbehandlungsanlage erhält man, wenn man als Prüf-Textil ein gebleichtes Textil einsetzt, das im wesentlichen die Eigenschaften des zu bleichenden Textils aufweist.

Ferner wird vorgeschlagen, dass man zur Untersuchung des Prüf-Textils dieses, gegebenenfalls nach einem Abwaschen mit sauberem Wasser, mit einer Salzsäurelösung imprägniert, dann insbesondere trocknet, und mit einer Lösung von Tetrakalium-hexacyanoferrat (II) imprägniert. Bei vorhandenem Eisen erhält man tiefblaue Niederschläge, die auch als "Berlinerblau" bezeichnet werden. Bei nur geringen Mengen an Eisen auf dem Prüf-Textil wird dieses entsprechend schwächer blau gefärbt. Das genannte Tetrakalium-hexacyanoferrat (II) wird auch als gelbes Blutlaugensalz bezeichnet.

Der besondere Vorteil dieser Untersuchung liegt in dem sehr schnellen Nachweis. Schon nach wenigen Minuten erhält man eine stark blaue oder schwach blaue Färbung oder überhaupt keine Färbung, wenn kein Eisen vorhanden war. Nicht nur eine qualitative Aussage, sondern auch eine gewisse quantitative Aussage durch die Stärke der Färbung läßt sich mit diesem Nachweis erhalten, die beim Nachforschen der Eisenquelle von erheblichem Nutzen sein kann.

Die Erfindung betrifft außerdem ein zum Durchführen des erfindungsgemäßen Verfahrens geeignetes Gerät. Die erfindungsgemäße Aufgabe wird bei diesem Gerät gelöst durch einen Einlass und einen Auslass für die zu prüfende Behandlungsflotte, eine mit dem Einlass verbundene Pumpe, eine mit der Pumpe verbundene Filtereinheit mit dem Prüf-Textil und Mittel zum Abschalten der Pumpe, wenn ein vorgegebenes Flüssigkeitsvolumen durch das Prüf-Textil geströmt ist. Mit diesem relativ einfachen und kostengünstigen Gerät lassen sich die erfindungsgemäßen Untersuchungsverfahren problemlos durchführen.

Um auf besonders einfache Weise einen Teil der zu untersuchenden Behandlungsflotte zu entnehmen, wird vorgeschlagen, dass ein erster Schlauch mit dem Einlass verbunden ist, welcher mit seinem anderen Ende dann einfach in die Behandlungsflotte gelegt wird.

Entsprechend kann mit Vorteil ein zweiter Schlauch mit dem Auslass verbunden sein, um die gefilterte Flotte wieder in das Behältnis zurückzuführen.

Da einige zu untersuchenden Flotten, z. B. das Entschlichtungsbad, welches häufig größere Mengen an Stärke enthält, relativ viskos sind, ist eine kräftige Pumpe von Vorteil. Daher wird vorgeschlagen, dass die Pumpe eine relative hohe Leistung hat.

Zur schnellen und einfachen Untersuchung einer Vielzahl von Behandlungsflotten ist es außerdem von Vorteil, wenn das Gerät ein Gehäuse aufweist und die Filtereinheit außerhalb des Gehäuses angeordnet und zum Austausch des Prüf-Textils bei geschlossenem Gehäuse zu öffnen ist. Erfindungsgemäß wird bei der einfachsten Ausführung des Gerätes nämlich nach jeder Untersuchung einer Behandlungsflotte das Prüf-Textil ausgetauscht.

Wenn die Filtereinheit separat demontierbar und innerhalb des Gehäuses aufbewahrbar ist, ist das erfindungsgemäße Gerät besonders gut zum Transport geeignet, da keine vom Gehäuse vorstehenden Teile vorhanden sind.

Besonders bewährt hat es sich, wenn die Mittel zum Abschalten der Pumpe ein Durchflussmessgerät und eine daran angeschlossene Rechen- und Steuereinheit aufweisen, welche mit der Pumpe verbunden ist.

Vorteile beim Transport des Gerätes mit dem Personenkraftwagen und auch in einem Flugzeug werden erreicht, wenn das Gerät, und insbesondere dessen Gehäuse, mindestens zwei Transportrollen und mindestens einen Handgriff aufweist. Vorzugsweise hat das Gerät daher ein entsprechend niedriges Gewicht.

Im folgenden wird ein Ausführungsbeispiel der Erfindung anhand von Zeichnungen näher erläutert. Es zeigen
- Figur 1: ein Fließbild eines erfindungsgemäßen Gerätes,
- Figur 2: eine perspektivische Ansicht dieses Gerätes von außen und
- Figur 3: eine perspektivische Ansicht des Gerätes bei geöffnetem Gehäuse.

In allen Zeichnungen haben gleiche Bezugszeichen die gleiche Bedeutung und werden daher gegebenenfalls nur einmal erläutert.

Wenn ein Betrieb zum Bleichen von Textilien Katalytschäden an der gebleichten Ware feststellt, ist es zum Abstellen dieses Problems wichtig, die Art des Katalysators und die Quelle dieser Metallpartikel festzustellen. Wie bereits erwähnt worden ist, kommt als häufigster Katalysator Eisen in Frage. Für den Nachweis von Eisen wird vorzugsweise die "Berliner-Blau-Reaktion" herangezogen. In dieser Reaktion ergeben Salzlösungen von dreiwertigem Eisen mit gelbem Blutlaugensalz (Tetrakalium-hexacyanoferrat (II)) tiefblaue Niederschläge, nämlich das "Berliner-Blau".

Zum Herausfinden der Ursache der Katalytschäden wird zunächst die Rohware untersucht. Die Stoffbahnen werden mit einer 5 %-igen Salzsäure-Lösung imprägniert, bei einer Temperatur von maximal 100 °C getrocknet und anschließend mit einer 5 %-igen Lösung von Tetrakalium-hexacyanoferrat (II) imprägniert. Nach einer ausreichend langen Verweilzeit, die nur wenige Minuten beträgt, wird die Ware auf dunkelblaue Flecken ("Stippen") geprüft, welche eine sichere Indikation für Eisenpartikel darstellen.

Sofern die Rohware frei von Eisenpartikeln ist, wird die Prüfung fortgesetzt. Alle wässrigen Behandlungsflotten, die vor der Bleiche mit Wasserstoffperoxid mit dem Textil in Berührung kommen, können Eisenverunreinigungen enthalten und müssen daher auf solche Eisenpartikel geprüft werden. Werden in einer bestimmten Flotte Eisenpartikel nachgewiesen, so sind die einzelnen Komponenten, aus denen die Flotte zubereitet wird, z. B. das verwendete Wasser, die Chemikalien, Dampf, usw. auf Eisenpartikel zu prüfen.

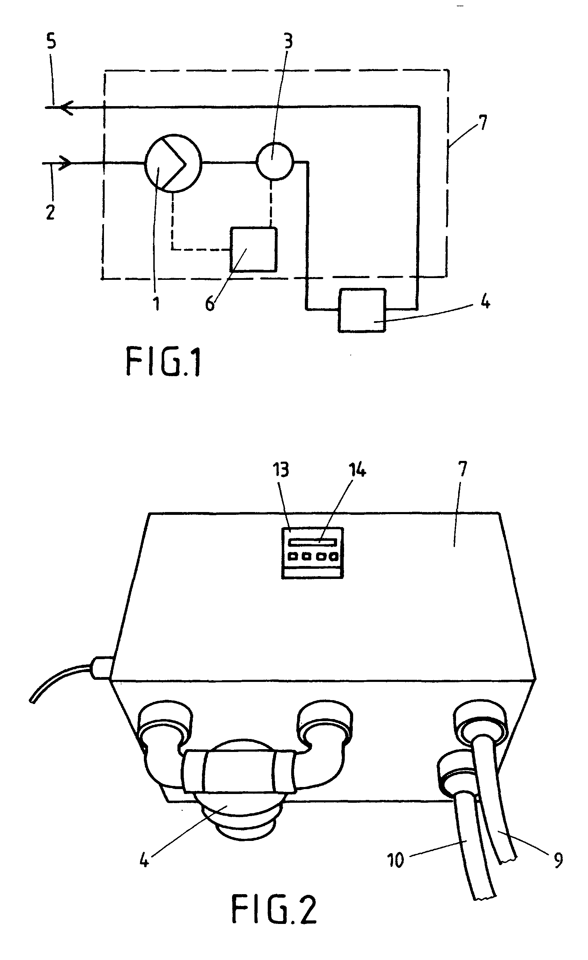

Im vorliegenden Ausführungsbeispiel erfolgt diese Prüfung mit dem Gerät nach den Figuren 1 bis 3. Wie aus dem Fließschema nach Figur 1 hervorgeht, wird die zu prüfende Behandlungsflotte von einer Pumpe 1 über einen Einlass 2 angesaugt, strömt durch ein Durchflussmessgerät 3, eine Filtereinheit 4 und zurück zum Auslass 5. Eine Rechen- und Steuereinheit 6 empfängt elektrische Signale über die gestrichelt eingezeichnete Leitung von dem Durchflussmessgerät. Wenn das vorgegebene Gesamtvolumen an zu prüfender Flotte durch das Durchflussmessgerät 3 geströmt ist, schaltet die Rechen- und Steuereinheit 6 die Pumpe 1 über die ebenfalls gestrichelt dargestellte elektrische Leitung ab.

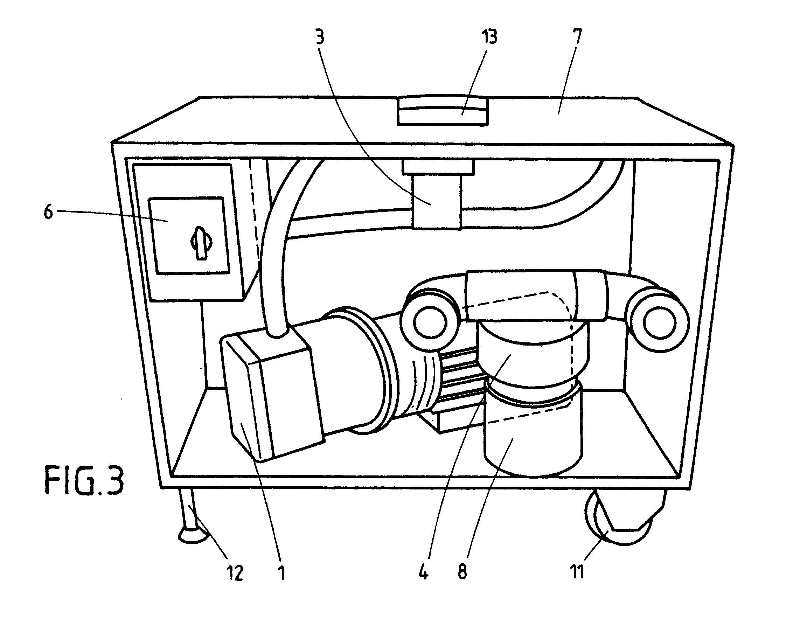

Die separat demontierbare Filtereinheit 4 ist außerhalb des Gehäuses 7 angeordnet. Zum Transport ist es günstig, diese Filtereinheit 4 abzuschrauben und in einem im Gehäuse 7 angeordneten topfartigen Behältnis 8 transportsicher aufzubewahren (Figur 3). Als Filtermedium der Filtereinheit 4 ist das oben genannte Prüf-Textil vorgesehen.

In Figur 2 sind außerdem ein erster Schlauch 9, der mit dem Einlass verbunden ist, und ein zweiter Schlauch 10, der mit dem Auslass verbunden ist, zu erkennen.

Die kräftige Pumpe ist in Edelstahl oder Kunststoff ausgeführt und insbesondere als Kolbenpumpe ausgebildet, da in einigen Fällen relativ hohe Drücke benötigt werden.

Zum bequemen Transport hat das Gerät an der Unterseite des Gehäuses 7 zwei Transportrollen 11 sowie zwei Standfüsse 12. Jeweils ein in den Figuren nicht sichtbarer Handgriff ist an der rechten und an der linken Seitenwand (Figur 3) angebracht.

Das Gerät wird von außen mittels einer Eingabeeinheit 13 bedient, welche ein Display 14 aufweist.

Zur Prüfung einer Behandlungsflotte wird wie folgt vorgegangen. Die Filtereinheit 4 wird mit einem sauberen, gebleichten Textil bestückt, welches ähnliche Eigenschaften wie die zu verarbeitende Ware hat. Im vorliegenden Beispiel wird über die Eingabeeinheit 13 ein Volumen von 50 Litern eingestellt und das Gerät gestartet, nachdem die Schläuche 9, 10 in das Bad mit der zu untersuchenden Flotte eingehängt worden sind. Auf diese Weise wird die entnommene Flotte nach der Filtration wieder zurück geführt. Nach genau 50 Litern Pumpvolumen schaltet die Rechen- und Steuereinheit 6 die Pumpe 1 ab. Nun wird das Gehäuse der Filtereinheit 4 aufgeschraubt, das Prüf-Textil entnommen, mit sauberem Wasser abgewaschen und getrocknet. Das trockene Prüf-Textil wird mit einer 1 bis 5 %-igem Salzsäure-Lösung imprägniert und wiederum getrocknet. Nach dem Imprägnieren mit einer 5 %-igen Lösung von gelbem Blutlaugensalz werden entweder kleine blaue Flecken sichtbar oder nicht, je nachdem, ob Eisenpartikel auf dem Prüf-Textil vorhanden waren. Eine starke Blaufärbung deutet dabei auf eine größere Menge an Eisenpartikeln, eine schwache Blaufärbung auf eine kleinere Menge hin.

Wurde kein Eisen gefunden, so wird die im Bleichverfahren weiter vorne eingesetzte nächste Behandlungsflotte untersucht. Wurde Eisen festgestellt, so werden nun die Komponenten untersucht, aus denen die Behandlungsflotte zubereitet worden ist, z. B. Wasser, Chemikalien, usw. Wenn dann die Ursache gefunden ist, läßt sie sich in der Regel relativ einfach abstellen, so dass künftig keine derartigen Katalytschäden an der fertigen Ware mehr zu beobachten sind.

### Bezugszeichenliste

- 1: Pumpe
- 2: Einlass
- 3: Durchflussmessgerät
- 4: Filtereinheit
- 5: Auslass
- 6: Rechen- und Steuereinheit
- 7: Gehäuse
- 8: Behältnis
- 9: erster Schlauch (Einlass)
- 10: zweiter Schlauch (Auslass)
- 11: Transportrolle
- 12: Standfuß
- 13: Eingabeeinheit
- 14: Display

## Patentansprüche

1. Verfahren zum Prüfen der Behandlungsflotten und deren Vorstufen, die zum, insbesondere kontinuierlichen, Bleichen von Textil mit einem oxidativen Bleichmittel, insbesondere Wasserstoffperoxid, eingesetzt werden, auf die Anwesenheit mindestens eines zu Katalytschäden auf und/oder im Textil führenden Katalysators in den einzelnen Behandlungsflotten bzw. deren Vorstufen,
**dadurch gekennzeichnet,**
**dass** ein vorgegebenes Volumen der zu prüfenden Behandlungsflotte bzw. der Vorstufe durch ein Prüf-Textil gefiltert und das Prüf-Textil danach auf die Anwesenheit des Katalysators untersucht wird.

2. Verfahren nach Anspruch 1,
**dadurch gekennzeichnet,**
**dass** man das vorgegebene Volumen der zu prüfenden Behandlungsflotte bzw. der Vorstufe unmittelbar aus dem Behältnis der Textilbehandlungsanlage entnimmt und nach der Filtration insbesondere wieder in dieses Behältnis zurückführt.

3. Verfahren nach einem der vorhergehenden Ansprüche,
**dadurch gekennzeichnet,**
**dass** das vorgegebene Volumen bei 20 bis 100 Litern liegt.

4. Verfahren nach einem der vorhergehenden Ansprüche,
**dadurch gekennzeichnet,**
**dass** der nachzuweisende Katalysator Eisen oder eine Eisenverbindung ist.

5. Verfahren nach einem der vorhergehenden Ansprüche,
**dadurch gekennzeichnet,**
**dass** man den beim Dämpfen eingesetzten Dampf kondensiert und das Kondensat in gleicher Weise wie eine Behandlungsflotte prüft.

6. Verfahren nach einem der vorhergehenden Ansprüche,
**dadurch gekennzeichnet,**
**dass** man beim Prüfen mehrerer hintereinander angeordneter Textilbehandlungsstufen mit der letzten Stufe beginnt und dann mit der jeweils früheren Stufe fortfährt, bis die Anwesenheit des gesuchten Katalysators in der Behandlungsflotte festgestellt wird, und dann gegebenenfalls die Vorstufen dieser Behandlungsflotte prüft.

7. Verfahren nach einem der vorhergehenden Ansprüche,
**dadurch gekennzeichnet,**
**dass** man als Prüf-Textil ein gebleichtes Textil einsetzt, das im wesentlichen die Eigenschaften des zu bleichenden Textils aufweist.

8. Verfahren nach einem der Ansprüche 4 bis 7,
**dadurch gekennzeichnet,**
**dass** man zur Untersuchung des Prüf-Textils dieses, gegebenenfalls nach einem Abwaschen mit sauberem Wasser, mit einer Salzsäurelösung imprägniert, dann insbesondere trocknet, und mit einer Lösung von Tetrakalium-hexacyanoferrat (II) imprägniert.

9. Gerät zum Durchführen des Verfahrens nach einem der vorhergehenden Ansprüche,
**gekennzeichnet durch**
einen Einlass (2) und einen Auslass (5) für die zu prüfende Behandlungsflotte, eine mit dem Einlass (2) verbundene Pumpe (1), eine mit der Pumpe (1) verbundene Filtereinheit (4) mit dem Prüf-Textil und Mittel zum Abschalten der Pumpe (1), wenn ein vorgegebenes Flüssigkeitsvolumen **durch** das Prüf-Textil geströmt ist.

10. Gerät nach Anspruch 9,
**dadurch gekennzeichnet,**
**dass** ein erster Schlauch (9) mit dem Einlass (2) verbunden ist.

11. Gerät nach Anspruch 9 oder 10,
**dadurch gekennzeichnet,**
**dass** ein zweiter Schlauch (10) mit dem Auslass (5) verbunden ist.

12. Gerät nach einem der Ansprüche 9 bis 11,
**dadurch gekennzeichnet,**
**dass** die Pumpe (1) eine relativ hohe Leistung hat.

13. Gerät nach einem der Ansprüche 9 bis 12,
**dadurch gekennzeichnet,**
**dass** das Gerät ein Gehäuse (7) aufweist, wobei die Filtereinheit (4) außerhalb des Gehäuses (7) angeordnet und zum Austausch des Prüf-Textils bei geschlossenem Gehäuse (7) zu öffnen ist.

14. Gerät nach dem vorhergehenden Anspruch,
**dadurch gekennzeichnet,**
**dass** die Filtereinheit (4) separat demontierbar und innerhalb des Gehäuses (7) aufbewahrbar ist.

15. Gerät nach einem der Ansprüche 9 bis 14,
**dadurch gekennzeichnet,**
**dass** die Mittel zum Abschalten der Pumpe (1) ein Durchflussmessgerät (3) und eine daran angeschlossene Rechen- und Steuereinheit (6) aufweisen, welche mit der Pumpe (1) verbunden ist.

16. Gerät nach einem der Ansprüche 9 bis 15,
**dadurch gekennzeichnet,**
**dass** das Gerät, und insbesondere dessen Gehäuse (7), mindestens zwei Transportrollen (11) und mindestens einen Handgriff aufweist.

## Claims

1. A process for testing treatment liquors and precursors thereof which are used for the bleaching, more particularly the continuous bleaching, of textiles with an oxidizing bleaching agent, more especially hydrogen peroxide, for the presence of at least one catalyst leading to catalyte damage on and/or within the textile in the individual treatment liquors or precursors thereof, **characterized in that** a predetermined volume of the treatment liquor or precursor to be tested is filtered through a test textile and the test textile is then tested for the presence of the catalyst.

2. A process as claimed in claim 1, **characterized in that** the predetermined volume of the treatment liquor or precursor to be tested is directly removed from the container of the textile treatment unit and, after filtration, is returned, more particularly to said container.

3. A process as claimed in any of the preceding claims, **characterized in that** the predetermined volume is 20 to 100 litres.

4. A process as claimed in any of the preceding claims, **characterized in that** the catalyst to be detected is iron or an iron compound.

5. A process as claimed in any of the preceding claims, **characterized in that** the steam used steaming is condensed and the condensate is tested in the same way as a treatment liquor.

6. A process as claimed in any of the preceding claims, **characterized in that**, where several textile treatment stages arranged one behind the other are tested, testing begins with the last stage and then continues successively to the previous stages until the target catalyst is found to be present in the treatment liquor, after which the precursors of that treatment liquor are optionally tested.

7. A process as claimed in any of the preceding claims, **characterized in that** a bleached textile essentially having the properties of the textile to be bleached is used as the test textile.

8. A process as claimed in any of claims 4 to 7, **characterized in that**, for testing, the test textile is impregnated with a hydrochloric acid solution, optionally after washing with clean water, and is then more particularly dried and impregnated with a solution of tetrapotassium hexacyanoferrate(II).

9. An apparatus for carrying out the process claimed in any of the preceding claims, **characterized by** an inlet (2) and an outlet (5) for the treatment liquor to be tested, a pump (1) connected to the inlet (2), a filter unit (4) with the test textile connected to the pump (1) and means for switching off the pump (1) when a predetermined volume of liquid has flowed through the test textile.

10. An apparatus as claimed in claim 9, **characterized in that** a first tube (9) is connected to the inlet (2).

11. An apparatus as claimed in claim 9 or 10, **characterized in that** a second tube (10) is connected to the outlet (5).

12. An apparatus as claimed in any of claims 9 to 11, **characterized in that** the pump (1) has a relatively high output.

13. An apparatus as claimed in any of claims 9 to 12, **characterized in that** it comprises a housing (7), the filter unit (4) being disposed outside the housing (7) and having to be opened to replace the test textile when the housing (7) is closed.

14. An apparatus as claimed in the preceding claims, **characterized in that** the filter unit (4) is designed to be separately dismantled and stored within the housing (7).

15. An apparatus as claimed in any of claims 9 to 14, **characterized in that** the means for switching off the pump (1) comprise a throughflow meter (3) and, connected thereto, a processor and control unit (6) which is connected to the pump (1).

16. An apparatus as claimed in any of claims 9 to 15, **characterized in that** the apparatus and more particularly its housing (7) comprises at least two transport rollers (11) an at least one handle.

## Revendications

1. Procédé de vérification des jus de traitement et de leurs stades précurseurs, qui sont utilisés pour le blanchiment - en particulier en continu - d'articles textiles avec un agent de blanchiment oxydatif, en particulier du peroxyde d'hydrogène, pour la présence d'au moins un catalyseur qui conduit à un endommagement par le catalyseur sur et/ou dans l'article textile, dans les jus de traitement individuels ou dans leurs stades précurseurs,
**caractérisé en ce qu'**
un volume prédéterminé du jus de traitement ou de son stade précurseur à étudier est filtré à travers un article textile d'essai et on recherche ensuite sur l'article textile d'essai la présence du catalyseur.

2. Procédé selon la revendication 1,
**caractérisé en ce que**
le volume prédéterminé du jus de traitement ou de son stade précurseur à essayer est prélevé immédiatement du récipient de l'installation de traitement de l'article textile, et on le ramène après la filtration en particulier à nouveau dans ce récipient.

3. Procédé selon l'une des revendications précédentes,
**caractérisé en ce que**
le volume prédéterminé se situe de 20 à 100 litres.

4. Procédé selon l'une des revendications précédentes,
**caractérisé en ce que**
le catalyseur à détecter est du fer ou un composé du fer.

5. Procédé selon l'une des revendications précédentes,
**caractérisé en ce qu'**
on condense la vapeur utilisée pour la vaporisation et on essaye le condensat de la même façon qu'un jus de traitement.

6. Procédé selon l'une des revendications précédentes,
**caractérisé en ce que**
lors de l'essai de plusieurs étapes de traitement d'article textile disposées les unes après les autres on commence avec la dernière étape et ensuite on poursuit avec les étapes respectivement antérieures jusqu'à ce que l'absence du catalyseur recherché soit constatée dans les jus de traitement, et ensuite on teste le cas échéant les stades précurseurs de ces jus de traitement.

7. Procédé selon l'une des revendications précédentes,
**caractérisé en ce qu'**
on utilise comme article textile d'essai un article textile blanchi qui possède pour l'essentiel les propriétés de l'article textile à blanchir.

8. Procédé selon l'une des revendications 4 à 7,
**caractérisé en ce qu'**
en vue de l'étude du textile d'essai le cas échéant après rinçage avec de l'eau propre on imprègne celui-ci avec une solution d'acide chlorhydrique, puis en particulier on le sèche et on l'imprègne avec une solution d'hexacyanoferrate (II) tétrapotassique.

9. Appareil pour l'exécution du procédé selon l'une des revendications précédentes,
**caractérisé par**
une entrée (2) et une sortie (5) pour le jus de traitement à essayer, une pompe (1) reliée à l'entrée (2), un élément de filtration (4) relié à la pompe (1), et comprenant le textile d'essai et des moyens de déconnexion de la pompe (1) lorsqu'un volume prédéterminé de liquide est passé à travers l'article textile d'essai.

10. Appareil selon la revendication 9,
**caractérisé en ce qu'**
un premier tuyau (9) est relié à l'entrée (2).

11. Appareil selon la revendication 9 ou 10,
**caractérisé en ce qu'**
un deuxième tuyau (10) est relié à la sortie (5).

12. Appareil selon l'une des revendications 9 à 11,
**caractérisé en ce que**
la pompe (1) a une puissance relativement élevée.

13. Appareil selon l'une des revendications 9 à 12,
**caractérisé en ce que**
l'appareil possède un carter dans lequel l'élément de filtration (4) est disposé en dehors du carter (7) et doit être ouvert pour dégager l'article textile d'essai, dans le carter (7) fermé.

14. Appareil selon la revendication précédente,
**caractérisé en ce que**
l'élément de filtration (4) est démontable séparément et peut être stocké à l'intérieur du carter (7).

15. Appareil selon l'une des revendications 9 à 14,
**caractérisé en ce que**
les moyens de déconnexion de la pompe (1) comprennent un appareil de mesure du débit (3) et un élément de calcul et de contrôle (6) raccordé à celui-ci, et relié à la pompe (1).

16. Appareil selon l'une des revendications 9 à 15,
**caractérisé en ce que**
l'appareil, et en particulier son carter (7), possède au moins deux roulettes de transport (11) et au moins une poignée.
